# EUROPEAN PATENT APPLICATION

(11) **EP 2 990 928 A1**
(43) Date of publication of application: **02.03.2016**
(21) Application number: 15182873.8
(22) Date of filing: 28.08.2015
(51) Int. Cl.: G06F 3/0488, G06F 3/0482, H04M 1/725

(54) **MOBILE TELECOMMUNICATIONS TERMINAL AND METHOD OF OPERATION THEREOF**

(30) Priority: 29.08.2014 GB 201415374
(71) Applicant: Vodafone IP Licensing Limited, The Connection Newbury Berkshire RG14 2FN (GB)
(72) Inventor: Buckingham, Peter, London, W2 6BY (GB)
(74) Representative: Boult Wade Tennant

(57) **Abstract**

A system and method of enabling a menu to be displayed on a touchscreen of a handheld computing device, the method including displaying a moveable menu icon on the touchscreen; defining one or more zones within an area of the touchscreen, such that the one or more zones are regions suitable for opening the menu icon; upon the user contacting the menu icon in a manner to activate the menu icon, determining the location of the menu icon, being its activation location, and: where the menu icon is located in one of the one or more zones, opening the menu icon at the activation location; otherwise moving the menu icon to one of the plurality of zones and opening the icon in the zone the icon is moved to.

## Description

### Technical Field

The present invention relates to a mobile terminal. More particularly the present invention relates to a mobile telecommunications terminal graphical user interface and a method of operation thereof.

### Background

Mobile terminals, particularly smartphones are now ubiquitous in the modern world. Initially the trend in mobile phones was towards a decreasing size, with the boundaries in size being determined by usability in terms of a user being able to both speak into the microphone and hear from the speaker simultaneously.

The trend now, however, is for mobile terminals to be essentially small computers, with extensive software functionalities. A consequence of this is that the size of mobile terminals has started increasing again. In particular it is desirable for the screens of mobile terminals to be as large as possible. To maximise the screen size, most smart phones now offer touch screens, so that additional keypads are not required.

One of the problems that results from this increase in size is that for users to interact with a large touchscreen mobile device, both hands are generally required in order to fully operate it; one to hold the device, and the other to perform the gestures or actions. For most users though this can be problematic, as there are many situations where only one hand is available to both hold and interact with the device (such as traveling or carrying other objects).

When a user is forced to use a large touchscreen device with one hand, the interaction is generally limited to the thumb digit - and due to the devices large surface area, generally not all areas of the screen are accessible. This can lead to the following problems:
- awkward hand posture
- insecure grip of the device
- limitations on device operation due to thumb's limited range.

There is therefore a need to overcome or at least ameliorate at least one problem of the prior art.

### Summary of the Invention

According to a first aspect, the present invention provides a mobile communication terminal as described in claim 1.

Other features of the invention are set out in the dependent claims.

In a further aspect, the present invention provides a method of enabling a menu to be displayed on a touchscreen of a handheld computing device, the method including:
defining a left hand portion and a right hand portion of the touchscreen;
displaying a moveable menu icon on the touchscreen, such that the menu icon is movable by user contact;
upon the user contacting the menu icon in a manner to activate the menu icon, determining the location of the menu icon, being its activation location, and:
   where the menu icon is located in the left hand zone of the touchscreen, opening the menu item in a form which extends to the right; and
   where the menu icon is located in the right hand zone of the touchscreen, opening the menu item in a form which extends to the left.

Preferably the left and right hand portions of the screen are defined relative to an orientation of the handheld computing device.

In another aspect, the present invention provides a method of activating an item of a menu displayed on a touchscreen of a handheld computing device, such that the menu comprises a menu hub with a plurality of first menu options and an adjacent panel menu providing at least one additional options, the method including:
determining that a user has made contact with an item of the menu hub displayed on the touchscreen;
determining that the contacted item is associated with the one or more additional options on the hub menu;
determining the user to select one of the additional options upon detecting the user to:
   - move their contact from the item on the hub menu to the additional option by sliding their screen contact point between the two in a manner that retains continual contact with the screen; and
   - release contact with the screen at the location of the additional option;
      where the user is determined to have selected the additional item, activating a functionality associated with the selected item.

These aspects of the invention may be implemented as a method, as detailed above, but additionally in regard to the functionality of a processor on a handheld computing device and also a handheld computing device including such a processor.

Advantageously, these embodiments of the invention enable fast access to actions, particularly regularly used actions, and enables these actions to be implemented during single-handed operation of even the largest of hand-held device screens. Also, by defining zones, within which the menu icon may be expanded and activated, that are within a region reachable by a user's thumb during single handed operation, greater usability and user satisfaction is achieved.

### Brief Description of the Drawings

The invention will now be described with reference to the Figures, in which:
Figure 1 illustrates examples of typical thumb reach regions for single handed operation of a mobile communications device;
Figures 2A, 2B and 2C illustrate three screenshots of a mobile communications terminal illustrating an implementation of a movable menu icon according to an embodiment of the invention;
Figure 3 illustrates a screenshot of a mobile communications terminal illustrating an implementation of an expanded menu format of the movable menu icon of Figure 2;
Figures 4A, 4B, 4C and 4D illustrate the icon and menus according to Figures 2A, 2B, 2C and 3 respectively, without the mobile communications device as background;
Figure 5A and 5B illustrate examples of geometries that may be utilised for the expanded menu icon of Figure 3;
Figure 6 provides a graphical representation of how a processor determines appropriate positioning of the menu graphic according to a further embodiment of the invention;
Figure 7 provides a graphical representation of how a processor determines appropriate positioning of the menu graphic according to a still further embodiment of the invention; and
Figures 8A, 8B and 8C illustrate a mode of operating the menu icon according to a still further embodiment of the invention.

### Detailed Description

These embodiments of the invention were predicated on the need to enable easier one handed use of a hand-held computing device. Various computing devices are envisaged, but in particular mobile communication devices, tablets and other devices with a touchscreen that can be held in a single hand. Further, when held singlehandedly, the device envisaged for the implementation of this invention should also be operable by the user, in that the user should be able to touch the screen using the same hand holding the device (i.e. using their thumb) in order to operate the touchscreen. By touchscreen, a screen that can be activated by direct user contact, particularly by fingertip activation, is intended.

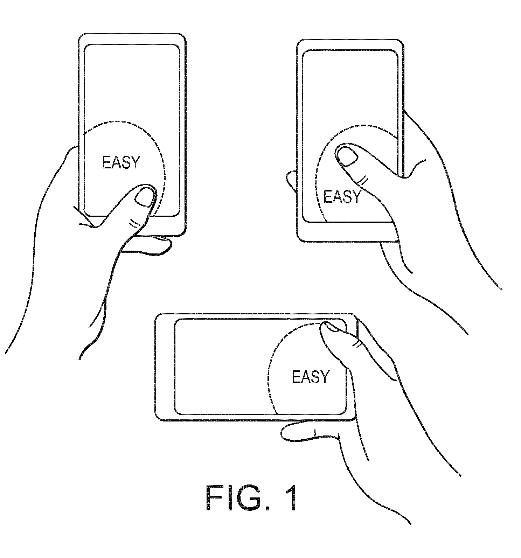

When a user holds a mobile communication device, the device typically sits in the palm of the user's hand, and they activate the device by pressing appropriate icons on the screen with their thumb. In this way, the user's thumb has an arced sweeping range on the screen within which it is able to press icons to activate them, but in most circumstances the user cannot access the whole screen. Where the communication device is smaller (e.g. with a <4" display), for single handed option, the user would need to tip the device towards themselves in order to access areas on the screen outside their thumb's sweep range. For larger devices however, such as a device with a 4" display, this is not possible as it is difficult to appropriately balance the phone in view of its large size. Figure 1 illustrates typical thumb reach regions for single handed operation of a mobile communications device, depending upon the orientation of the device.

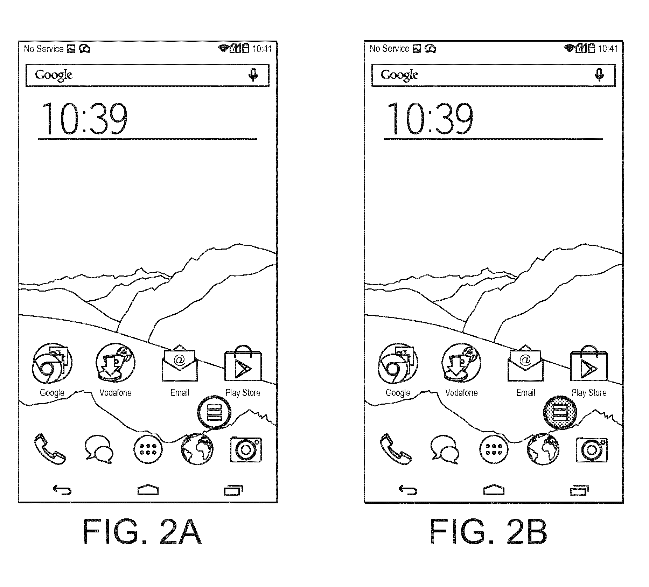

Figures 2A-2C illustrates how a first embodiment of the invention is implemented in order to improve the ability of a user to fully utilise the communication device's functionalities using single-handed operation. In this embodiment of the invention, a menu icon is provided which is able to be positioned within a user's thumb reach. This icon is an additional overlay to standard icons located on the desktop. A key difference of this menu icon over the desktop icons is this ability for the icon to be positioned within user thumb reach (i.e. it is moveable).

In Figure 2A, the menu icon is located on the screen in a zone accessible to the user. The icon on the screen of this Figure 2A example is inactive, which in this embodiment of the invention is illustrated by the icon being at a reduced opacity as compared with other icons on the screen. In this illustration the menu icon is at 30% opacity. It is also important to note that the inactive icon is positioned so that it does not overlap with the other icons on the screen - this ensures that the user does not have problems with selecting their desired icon. For instance, if there was significant overlap between the icons, the user may have trouble selecting the menu icon over an app on the home-screen, or vice versa. It is to be appreciated that whilst no overlap at all between the icons is preferable, some overlap is possible without unduly restricting the user's ability to activate all of the icons on the screen. In the Figure 2A example, the inactive version of the menu icon is positioned between rows of home-screen icons, with no overlap occurring. The menu icon in Figure 2A is circular or orbital in shape around the activation area (i.e. the original unactivated menu icon), although any shape map be utilised.

In the Figure 2B example, a visual illustration is provided as to how the menu icon may appear on the touchscreen upon being activated by the user. The icon may be activated by one or more taps or a tap and hold combination by the user. Upon activation the icon is no longer at reduced opacity. It is also preferably highlighted with a visually distinct colour, such as red.

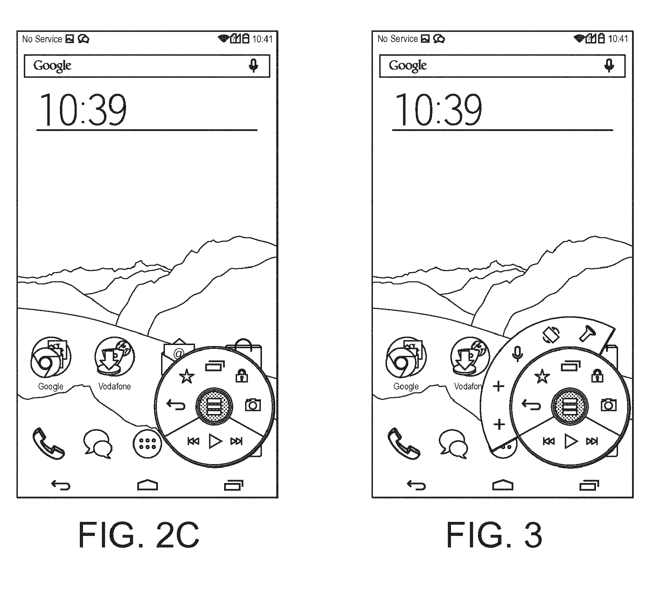

Alternatively, or in addition, upon activation the menu icon may launch directly into a menu arrangement, which in Figure 2C is in the form of a wheel around the circular menu icon. The original menu icon of Figure 2A can be considered to be a "home" icon element. The menu around the home icon element presents numerous menu options in a circular hub. These menu items ideally relate to functionalities that the user may need fast access to, such as regularly used actions, like "Back", "Recent Apps", "Screen lock" or "Camera". The user can select any of the menu options presented in the circular hub with a tap or slide gesture. The menu items may be determined automatically (e.g. the most regularly used functionalities) or may be customisable.

It is also to be appreciated that when activated, this menu icon overlays icons on the home-screen of the communications device. In other words, the menu icon is given priority over the home-screen icons upon its activation.

If the user activates any of the featured actions in the hub menu, then preferably the action is performed and the menu disappears from view, or returns to the inactive menu icon (i.e. to Figure 2A).

By positioning the home menu icon within a region accessible to the user during single handed operation, and enabling the menu icon to present numerous menu functionalities within easy reach of the user, this embodiment of the invention enables a mode of single handed input that caters to the thumb's limited operational range.

According to a further embodiment of the invention, an enhanced approach for enabling user interaction with the menu icon of Figure 2C is provided. In this embodiment, however, one or more icons in the hub menu are associated with an additional menu tray, which is positioned adjacent to a portion of the circular hub menu. This is illustrated in Figure 3.

This additional menu tray or panel provides additional menu options and, in this example illustration, is a curved panel positioned around a portion of the hub menu. The menu options in this panel, are preferably related to one of the icons in the main wheel hub (e.g. user favourites accessed from the favourites icon on the main hub). This however is not essential, and they may be overflow icons (i.e. icons that could not be included on main hub).

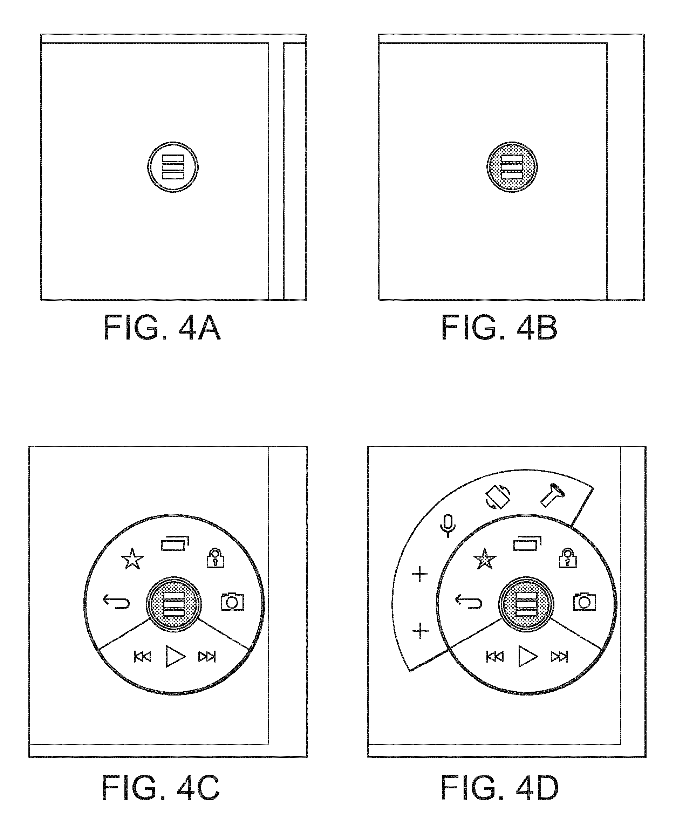

As a better illustration of the menu icon and the expanded hub menus of Figures 2 and 3, reference should be made to Figures 4A-4D. These Figures show the different phases of the icon and menus extant the communications device. More specifically, Figure 4A illustrates the 30% opaque inactive state of the home icon as per Figure 2A. Figure 4B shows the activated home icon of Figure 2B without the communications device in the background. Figure 4C shows the activated hub menu about the home icon, as per Figure 2C and Figure 4D shows the additional panel or tray menu around a part of the hub menu as per Figure 3.

The items on the additional panel are also preferably customisable. For instance, with reference to Figures 3 and 4D, if a menu slot is empty and available to a user to place a desired functionality in the additional panel, a symbol, such as a "+" may be utilised to convey this availability. The user is then able to select such an empty slot, which preferably brings up a list of available functions and shortcuts which may be incorporated. Upon the user selecting one of these available functions, an appropriate shortcut icon will replace the "+" symbol in the additional panel.

In a corresponding manner the user may remove shortcut icons from the additional panel. This can be achieved by the user performing a tap and hold operation upon the shortcut they wish to have removed. The selected icon will then be "editable", and the user will be able to drag it to a "bin" icon. The bin icon preferably overlays the central home icon upon the edit mode being activated. Where the user moves the selected icon to the bin, the position from which the icon was removed can be indicated as empty using a "+" symbol and the bin icon changed back to the original form of the central home icon.

The additional panel is provided in close adjacent proximity to the hub menu so that the user can easily reach the menu items thereon when using the device in one hand.

It is also to be appreciated that even though only one additional curved menu panel is illustrated in Figures 3 and 4D, more may be utilised. For instance, alternative menu panels may be associated with other hub menu icons (i.e. not just the Favourites icon as shown in Figure 3). For instance, the user touching on the recent apps icon (to the right of the Favourites icon in Figure 3) may cause an alternative panel menu to be shown, with one or more shortcuts to recently used apps. This alternative menu panel is preferably symmetrically positioned about the recently used apps section of the hub menu, but may have the same orientation as the other panel menu (i.e. illustrated in Figure 3).

In another alternative, further additional panel menus may extend out radially from the first panel menu. These additional curved panels however need to be configured so that they are within reach of a typical user's digit during single-handed operation.

In view of the menu icon being moveable and utilised as an overlay to a device's home-screen, it is important that the dimensions of the menu are compatible with both other functionalities on the home-screen. It is also important that the menu arrangement be of a size where the whole arrangement is accessible to a user during single-handed operation. These two considerations therefore need to be balanced.

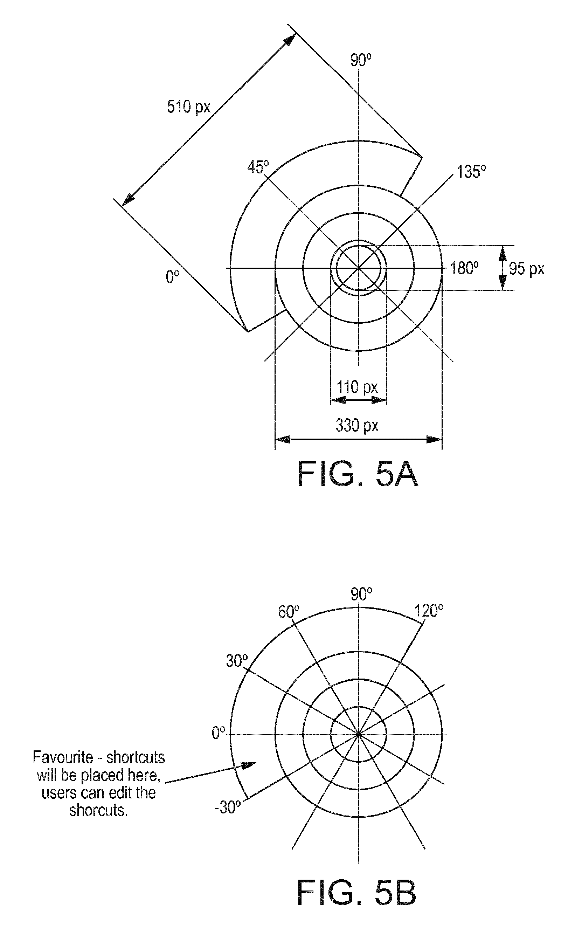

Figures 5A and 5B illustrate examples of geometries that may be utilised for the home icon, the hub menu and the panel menu. In both of the examples, the home icon has a diameter of 110 pixels. Also, in both Figure 5A and 5B the hub menu around the home icon has a diameter of 330 pixels (i.e. 110 pixels either side of the hub menu), and is divided into a number of equally sized sections.

In the example of Figure 5A, the hub menu is divided into eight equal 45° sections, and in the Figure 5B the hub menu is divided into twelve equal 30° sections. The panel menu is made up of a number of sections which are positioned radially beyond the hub menu.

More particularly, in Figure 5A, two of the sections of the panel menu are positioned as direct radial extensions from the hub menu, maintaining the radial lines of their adjacent 45° sections, whilst the two outer ones do not correspond precisely to the radial lines of the hub sections to which they are adjacent. In Figure 5B, all of the sections of the panel menu sections maintain the radial lines of their adjacent hub menu sections. This provides the overall structure of the menu, and shortcut icons can be configured in the sections and/or on the radial lines of the sections, as desired.

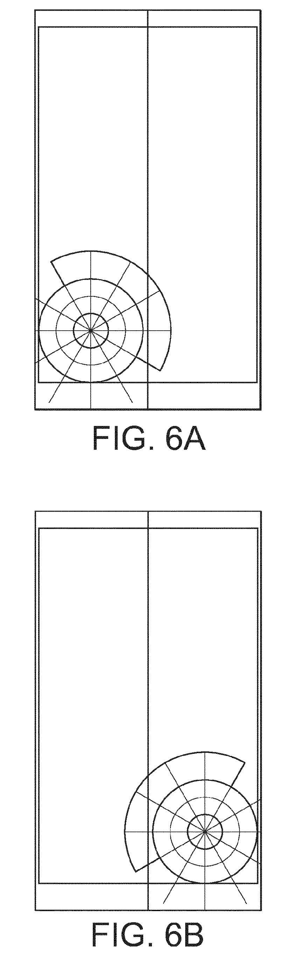

A further embodiment of the invention relates to the positioning of the expanded menu graphic on the touchscreen. In this regard, Figure 6 provides a graphical illustration of how a processor of the communications device may determine an appropriate position.

It is firstly to be appreciated from Figure 6 that, depending upon whether or not left hand or right hand operation is required, a mirror image of the expanded menu graphic is used. For instance, if the user is holding the device in their left hand, the user's thumb will be operating the touchscreen from the left hand side, and so the version of the activated hub menu that is utilised, has the panel menu extending towards the right. The opposite is applies for right handed operation.

In view of these two different mirror image menu configurations, this embodiment of the invention provides a mechanism that determines the appropriate form of the expanded menu to utilise dependent upon the position of the home icon. As shown in Figure 6, the screen is divided into two components, being a left side component and a right side component. Ideally this screen division is midway, but this is not essential. Based upon the line dividing the two sections, if the home menu icon is activated whilst to the left of the dividing line (i.e. in the left hand section), then the first expanded menu form is used (i.e. that where the panel menu extends rightwardly). If however the home menu icon is activated whilst to the right of the dividing line (i.e. in the right hand section), then the second expanded menu form is used (i.e. where the panel menu extends leftwardly).

Advantageously this embodiment of the invention enables the most appropriate menu configuration to be displayed for the user's use and interaction, depending upon the location of the menu icon.

It is also to be appreciated that the left and right hand sections are preferably defined relative to the orientation of the device, and accordingly change in shape depending on whether the user is holding the device in upright mode or landscape.

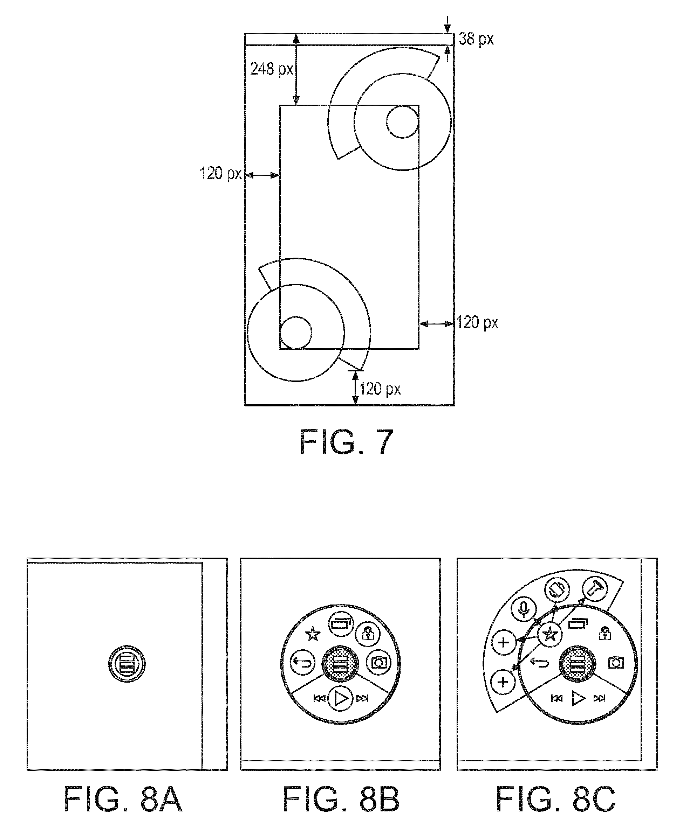

A still further embodiment of the invention, which also relates to the positioning of the expanded graphic on the touchscreen, is illustrated in relation to Figure 7. In order to ensure a clear representation of the expanded menu when fully opened out, the expanded menu should sit at least 10 pixels away from any side edge. Accordingly, as shown in Figure 7, for both configurations of the menu, the outer side edge of the expanded menu corresponds to the hub menu. Applying the dimensions described in relation to Figure 5, where the hub menu has a radius from the home icon radius of 110 pixels, the home icon button should be placed 120 pixels from both the left and right and edges (as measured to the circumference of the home icon button.

Also, the expanded menu should not overlap with the status bar, typically located along the top edge of the screen. Therefore, the positioning of the expanded menu should incorporate a top margin of about 38 pixels to account for this status bar. With reference to Figure 7, to determine the closest point at which the home icon button should be placed to this top edge it can be seen that the radius of the additional panel menu needs to be taken into account. Again with reference to the dimensions described in Figure 5, where this additional panel menu has a radius of 100 pixels from the hub menu (and the hub menu has a radius of 110 pixels from the home icon edge), the home icon edge should be placed a minimum of 248 pixels from the top of the screen.

In other words, knowing the diameter of the components of the expanded menu will therefore enable the optimum position of the home icon to be determined (i.e. so that it can be opened fully and be as close as possible to the user's thumb when in use).

As it is preferable that the home icon transforms into the expanded menu without moving the home icon from its position when activated, it is important that the home icon, although moveable, is retained within the bounds of these positional parameters, so that when it is expanded, it does not extend beyond the bounds of the screen, or overlap with the status bar. So in this embodiment, the icon will open from its current position provided it is positioned within the defined boundaries on the overall screen area.

If the icon is positioned outside the defined boundaries when it is activated, the processor will recognise this anomaly and move the icon so that it is within the defined boundaries before expanding the icon. The position the icon is moved to will ideally involve moving the icon the least distance possible.

This is an important aspect of this invention, as effectively, the defined boundaries result in one or more zones within the touchscreen area to be defined within which the menu icon can be expanded automatically. In Figure 7 one such zone is illustrated (i.e. the whole central region of the screen) but this could be split into multiple smaller zones, which align more closely with a user's reach during single-handed use. In this way, the zones are regions suitable for opening the menu icon during single handed use.

This aspect of the invention is implemented by a process which determines the user's position on the screen upon the user seeking to activate the menu icon. If it determines that the user's activation location is located in the allowable zone (such as shown in Figure 7), then the menu icon is activated in situ. However, if the menu icon is not located in the allowable zone, and is located in the boundary area, for instance, then the processor will not automatically open the menu icon. Instead, the processor will determine a position within the allowable zone and more the icon there before allowing the menu icon to be opened. This may be a default position, but preferable the processor calculates a location in the zone that requires the least repositioning movement by the icon (i.e. a location in the allowable zone that is the closest/nearest to the icon). This can be readily determined by the processor knowing the location of the menu icon relative to the one or more zone locations.

It is also to be appreciated that the one or more zones are preferably defined relative to the orientation of the device, and accordingly change depending on whether the user is holding the device in upright mode or landscape.

From the discussion of the above embodiments of the invention, it will be apparent that the inactive menu icon is movable about the screen. This is ideally achievable via single-handed operation, such as by a combination of tap and sliding motions. For instance, the user may seek to position the icon in a position that is more easily accessible to them, and they can do this by a tap and hold action, followed by sliding the icon to the required position. If this position is within the defined boundaries of allowable operation for the menu, the icon may be expanded upon the user activating the icon. If the position is outside the defined boundaries of allowable operation, then the icon will be moved to the closest position within the boundaries before expanding it.

In a still further embodiment of the invention, a unique mechanism for operating the expanded menu icon itself is provided. Figures 8A-8C provides an illustration of this embodiment of the invention. In Figure 8A, the home menu icon is illustrated, which the user is required to tap and hold in order to activate. Figure 8B illustrates the activated menu, which now includes the hub menu around the home icon. To activate any of the shortcut icons illustrated in this hub menu, the user need only slide their finger over any of them and lift to activate. Where the shortcut icon is associated with an additional panel menu (such as illustrated in Figure 8C in relation to the Favourites icon), this additional menu will be displayed when the user's finger is placed over the Favourites icon. To then select one of the icons in the additional panel menu, the user needs only to slide their finger over to the required shortcut icon and release their finger in order to active the selected icon.

Advantageously this is a manner of operation that the user is able to manage with ease during single handed operation of the device.

It is to be appreciated that the embodiments of the present invention described herein are to be considered illustrative of the invention and not limitative.

For example, although the icons have been described as generally being either preset or selectable by the user, this is not essential, and the processor controlling the operation of the menu functionality may adapt the icons depending upon a state of the communications device. For instance, one of the functionalities included in the hub menu may be to lock or enable a screen rotation functionality. If the processor determines that the screen rotation functionality is locked, it will present a suitable icon illustrating this locked status. Alternatively, if the processor determines that the screen rotation functionality is enabled, it will present a different icon to visually illustrate this status to the user. This is an important feature of the invention and may be utilised in conjunction with any one or more of the other embodiments of the invention herein described.

It is also to be appreciated that the menu icon need not always be available on the communication device. If required, the availability can be set to an "off state" via an option in the standard settings of the device.

Also, the activation of the home menu icon was described in relation to Figures 2 and 4. In this regard it is to be appreciated that a closing sequence may correspond to the reverse of this procedure. The closing sequence may be initiated after a time out period of user inaction (e.g. 30 seconds) or when the user interacts or taps outside the expanded menu icon.

It is also to be appreciated that all of these embodiments of the invention are complimentary and may be utilised separately or in combination with one or more of the other embodiments.

## Claims

1. A method of enabling a menu to be displayed on a touchscreen of a handheld computing device, the method including:
displaying a moveable menu icon on the touchscreen;
defining one or more zones within an area of the touchscreen, such that the one or more zones are regions suitable for opening the menu icon;
upon the user contacting the menu icon in a manner to activate the menu icon, determining the location of the menu icon, being its activation location, and:
where the menu icon is located in one of the one or more zones,
opening the menu icon at the activation location;
otherwise moving the menu icon to one of the plurality of zones and opening the icon in the zone the icon is moved to.

2. The method of claim 1 wherein the activated menu icon includes a series of selectable options arranged orbitally around an activation area, and additionally comprises an additional panel area adjacent a portion of the orbital including one or more additional selectable options.

3. The method of claim 1 or 2, where the menu icon is not located in one of the plurality of zones, further including:
determining a zone that is nearest to the activation location;
moving the icon to the nearest zone; and
opening the icon in the nearest zone.

4. The method of any one preceding claim where the one or more defined zones are located in an area reachable by a user operating the device single-handedly.

5. The method of any one preceding claim wherein the one or more defined zones are located in a left and/or right hand corner of the screen, being areas reachable by a user operating the device single-handedly.

6. The method of any one preceding claim, wherein the user contact to activate the icon is contact by a finger of the user.

7. The method of any one preceding claim further including:
defining a left hand portion and a right hand portion of the touchscreen;
displaying a moveable menu icon on the touchscreen, such that the menu icon is movable by user contact;
upon the user contacting the menu icon in a manner to activate the menu icon, determining the location of the menu icon, being its activation location, and:
where the menu icon is located in the left hand zone of the touchscreen, opening the menu item in a form which extends to the right; and
where the menu icon is located in the right hand zone of the touchscreen, opening the menu item in a form which extends to the left.

8. The method of claim 7 wherein the left and right hand portions of the screen are defined relative to an orientation of the handheld computing device.

9. The method of any one preceding claim further including:
determining that a user has made contact with an item of the menu hub displayed on the touchscreen;
determining that the contacted item is associated with the one or more additional options on the hub menu;
determining the user to select one of the additional options upon detecting the user to:
- move their contact from the item on the hub menu to the additional option by sliding their screen contact point between the two in a manner that retains continual contact with the screen; and
- release contact with the screen at the location of the additional option;
where the user is determined to have selected the additional item, activating a functionality associated with the selected item.

10. A processor of a handheld computing device, and configured to enable a menu to be displayed on a touchscreen of the handheld computing device, the processor being configured to:
display a moveable menu icon on the touchscreen;
define one or more zones within an area of the touchscreen, such that the one or more zones are regions suitable for opening the menu icon;
upon the user contacting the menu icon in a manner to activate the menu icon, determine the location of the menu icon, being its activation location, and:
where the menu icon is located in one of the one or more zones, open the menu icon at the activation location; or
otherwise move the menu icon to one of the plurality of zones and open the icon in the zone the icon is moved to.

11. The processor of claim 10 wherein the activated menu icon includes a series of selectable options arranged orbitally around an activation area, and additionally comprises an additional panel area adjacent a portion of the orbital including one or more additional selectable options.

12. The processor of claim 10 or 11, wherein, where the menu icon is not located in one of the plurality of zones, the processor is further configured to:
determine a zone that is nearest to the activation location;
moving the icon to the nearest zone; and
opening the icon in the nearest zone.

13. The processor of any one of claims 10 to 12 where the one or more defined zones are located in an area reachable by a user operating the device single-handedly.

14. The processor of any one of claims 10 to 13 wherein the one or more defined zones are located in a left and/or right hand corner of the screen, being areas reachable by a user operating the device single-handedly.

15. A handheld computing device including the processor of claim 10.
